# EUROPEAN PATENT SPECIFICATION

(11) **EP 3 722 710 B1**
(45) Date of publication and mention of the grant of the patent: **02.10.2024**
(21) Application number: 20168005.5
(22) Date of filing: 03.04.2020
(51) Int. Cl.: A23B 7/04, A23L 3/36, F25D 17/04, A23L 3/3418, A23B 7/148, F25D 11/00

(54) **REFRIGERATION UNIT WITH ATMOSPHERE CONTROL SYSTEM**
KÜHLEINHEIT MIT ATMOSPHÄRENSTEUERSYSTEM
UNITÉ DE RÉFRIGÉRATION DOTÉ D'UN SYSTÈME DE RÉGULATION DE L'ATMOSPHÈRE

(30) Priority: 12.04.2019 US 201962833066 P
(43) Date of publication of application: 14.10.2020
(60) Divisional application: 24197084.7
(73) Proprietor: Carrier Corporation, Palm Beach Gardens, FL 33418 (US)
(72) Inventor: POSTGATE, Farley William, East Syracuse, New York 13057 (US); SPEARING, Robert C., East Syracuse, New York 13057 (US); FLEMING, Malcolm N., Syracuse, New York 13221 (US); CRESSWELL, Kenneth E., Syracuse, New York 13221 (US); HOFSDAL, Gilbert B., Syracuse, New York 13221 (US); KRAUSE, Paul J., Syracuse, New York 13221 (US)
(74) Representative: Dehns

(56) References cited:
- EP-A1- 3 054 244
- EP-A1- 3 109 576
- EP-A1- 3 258 192
- EP-A1- 3 259 994
- EP-A1- 3 339 777
- EP-A1- 3 441 703
- WO-A1-01/92797
- JP-A- 2018 148 877

## Description

The subject matter disclosed herein relates to an atmosphere control system for a refrigerated container, and specifically to a system for regulating the atmosphere (e.g., amounts of nitrogen, oxygen, and/or carbon dioxide) inside a refrigerated container resulting in an atmospheric composition that extends post-harvest shelf life or quality of perishables, such as fruits, vegetables, pharmaceuticals, etc.

A typical refrigerated cargo container, such as those utilized to transport cargo via sea, rail or road, is a container modified to include a refrigeration unit located at one end of the container. The refrigeration unit includes a compressor, condenser, expansion valve and evaporator. A volume of refrigerant circulates throughout the refrigeration unit, and one or more evaporator fans of the refrigeration unit blow a flow of supply air across the evaporator thereby cooling the supply air and forcing it out into the container.

An atmosphere control system controls the amount of oxygen and carbon dioxide inside the refrigerated container to, for example, change the rate of ripening of produce stored in the container. The atmosphere control system may control the amount of oxygen (O2) and carbon dioxide (CO2) in the container. EP 3054244 A1 discloses a container refrigeration apparatus comprising an air compressor configured to generate compressed air, the air compressor located outside the container, and a first and second separator configured to receive the compressed air and output nitrogen into the interior of the container. A valve between the compressor and the first and second separators controls which of the separators the compressed air is directed to. WO 0192797 A1 discloses a storage cabinet comprising a pressure increasing means connected upstream of an oxygen removal device. Outside air is received by the pressure increasing means and oxygen depleted gas from the oxygen removal device is received by a storage compartment of the storage cabinet. EP 3441703 A1 discloses an indoor air-conditioning device which includes a gas supply device and a controller which together perform a gas supply operation of supplying nitrogen-enriched air into a container such that the inside air has a desired composition.

An aspect of the invention provides a refrigeration unit as claimed in claim 1.

The valve, in a closed position, may direct compressed air to the separator.

The refrigeration unit may include a controller configured to control the valve to move between the open position and the closed position.

The controller may be configured to control the compressor.

The refrigeration unit may include a sensor in the evaporator section, the sensor may be configured to measure a level of a gas in the container; wherein the controller may be configured to move the valve between the open position and the closed position in response to the level of the gas in the container.

The atmosphere control system may comprise at least one filter between the water separator and the separator.

The at least one filter may be located in the condenser section, or the at least one filter may be located in the evaporator section.

Technical effects of embodiments of the present disclosure include the provision of an air compressor of an atmosphere control system in a condenser section of a refrigeration unit for use with a container.

The present disclosure is illustrated by way of example and not limited in the accompanying figures in which like reference numerals indicate similar elements.
FIG. 1 depicts a refrigerated container.
FIG. 2 depicts a refrigeration unit.
FIG. 3 depicts a refrigeration unit with an atmosphere control system.
FIG. 4 depicts an atmosphere control system.
FIG. 5 depicts an atmosphere control system.

The detailed description explains embodiments of the invention, together with advantages and features, by way of example with reference to the drawings.

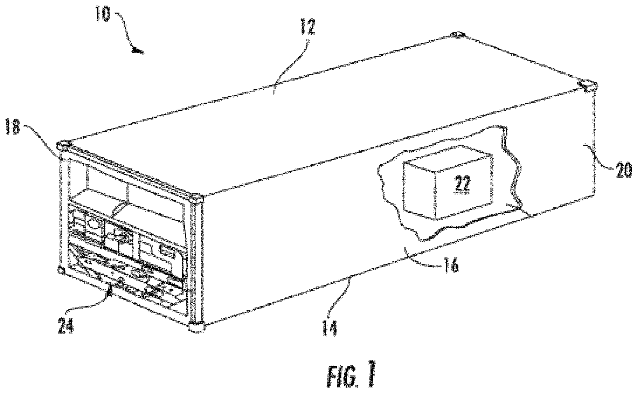

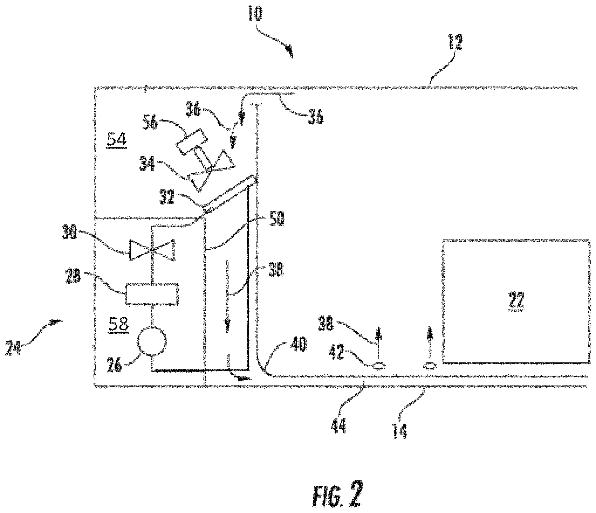

Shown in FIG. 1 is a refrigerated container 10. The container 10 has a generally rectangular construction, with a top wall 12, a directly opposed bottom wall 14, opposed side walls 16 and a front wall 18. The container 10 further includes a door or doors (not shown) at a rear wall 20, opposite the front wall 18. The container 10 is configured to maintain a cargo 22 located inside the container 10 at a selected temperature through the use of a refrigeration unit 24 located at the container 10. The container 10 is mobile and is utilized to transport the cargo 22 via, for example, a truck, a train or a ship. The container 10 may be integrated with a trailer or chassis. The refrigeration unit 24 is located at the front wall 18, and includes a compressor 26, a condenser 28, an expansion device 30 (e.g., a TXV or EXV), an evaporator 32 and an evaporator fan 34 (shown in FIG. 2), as well as other ancillary components.

Referring to FIG. 2, the refrigeration unit 24 flows return air 36 across the evaporator 32 via the evaporator fan 34, thus cooling the return air 36 to a selected temperature and urges the cooled return airflow 36, now referred to as supply air 38, through a refrigeration unit outlet 40 into the container 10 via, for example, openings 42 in one or more T-bars 44 extending along the bottom wall 14 of the container 10 to cool the cargo 22.

The refrigeration unit 24 is separated into an evaporator section 54 containing the evaporator 32, the evaporator fan 34 and an evaporator fan motor 56 and a condenser section 58 containing the compressor 26, the condenser 28 and the expansion device 30. The expansion device 30 may be located in the evaporator section 54. The evaporator section 54, which may be located above the condenser section 58, is separated from the condenser section 58 by a panel 50 that extends across the refrigeration unit 24. The condenser section 58 is exposed to ambient air and may be covered by panels having openings formed therein. In operation, refrigerant is circulated in serial fashion through the compressor 26, the condenser 28, the expansion device 30, the evaporator 32 and back to the compressor 26. It is understood that the refrigeration unit 24 may include additional components (e.g., economizer, receiver, SMV, etc.) that are not shown.

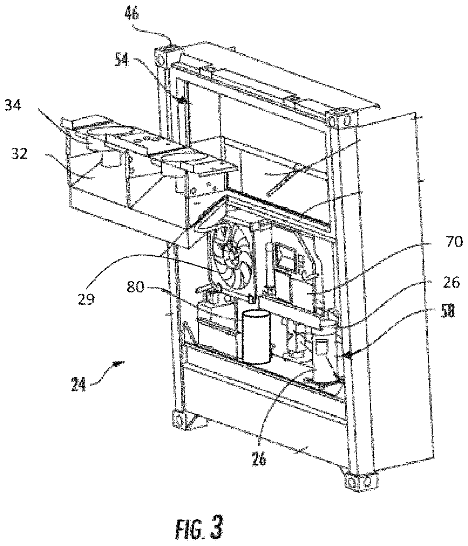

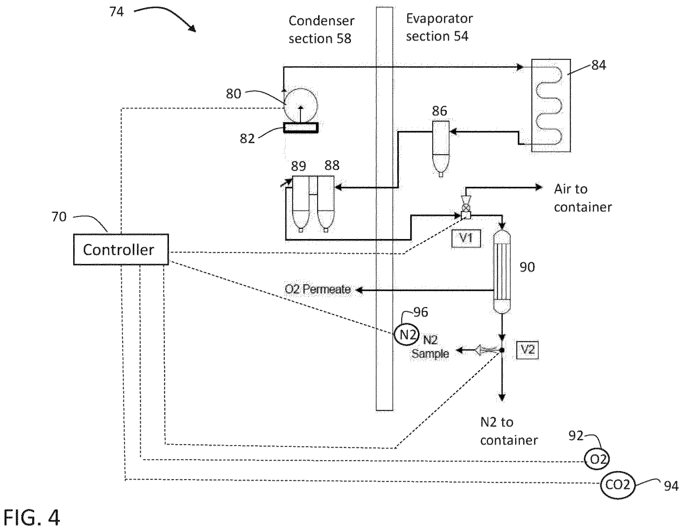

Referring now to FIG. 3, the refrigeration unit 24 includes a housing 46 to contain components of the refrigeration unit 24. Optionally, the housing 46 is separate and distinct from the container 10, or alternatively, the housing 46 is an integral part of the container 10. A condenser fan 29 is driven by a condenser motor (not shown) to drive air over the condenser 28 and discharge the air outside the refrigeration unit 24. The condenser 28 may be radially disposed about the condenser fan 29. A controller 70 controls operation of the refrigeration unit 24, for example, by controlling the compressor 26 (e.g., on/off/variable speed), evaporator fan motor 56 (e.g., on/off/variable speed), condenser fan motor (e.g., on/off/variable speed), etc. The controller 70 may be implemented user a processor-based device including a microprocessor, memory, user interface, I/O inputs, etc. The controller 70 controls components of the refrigeration unit 24 to maintain a desired temperature within the interior of the container 10, as known in the art. An air compressor 80 is located in the condenser section 58. The air compressor 80 is a component of an atmosphere control system 74 (FIG. 4) that operates to regulate atmosphere (e.g., oxygen and carbon dioxide) in the interior of the container 10.

FIG. 4 depicts the atmosphere control system 74 in an example embodiment. The atmosphere control system 74 operates to control levels of at least one gas inside the container 10. In an embodiment, the atmosphere control system 74 operates to control levels of oxygen and/or carbon dioxide. The atmosphere control system 74 includes the air compressor 80 located in the condenser section 58 and thus outside the interior of the container 10. The controller 70 may turn on the air compressor 80 by sending a signal to a relay or contactor that applies power to the air compressor 80. When turned on, the air compressor 80 draws air from outside the container 10 through a first filter 82 (e.g., a 50 micron particulate filter). The compressed air produced by the air compressor 80 flows from the condenser section 58 into the evaporator section 54 to a heat exchanger 84. The heat exchanger may be an air-cooled heat exchanger of various types (e.g., round tube plate fin, microchannel, etc.). At heat exchanger 84, the compressed air is cooled to facilitate water removal. From the heat exchanger 84, the compressed air flows to a water separator 86 where water is removed. From the water separator 86, the compressed air flows to a second filter 88 (e.g., a 5 micron particulate filter) and a third filter 89 (e.g., a 0.01 micron particulate filter). The second filter 88 and the third filter 89 may be located in the condenser section or the evaporator section 54.

From the second filter 88 and the third filter 89, the compressed air flows to a first valve, V1. The first valve V1 has two outlets, which can be controlled by controller 70. When the first valve V1 is in a first position (e.g., an open position when energized), the compressed air is output from the first valve V1 to the interior of the container 10. The first valve V1 may be located to provide the air upstream of the evaporator 32. When the first valve V1 is in a second position (e.g., a closed position when not energized), the compressed air is directed to a separator 90. The separator 90 may be a membrane separator that generates an output of highly pure, separated nitrogen upstream of evaporator 32. Other atmospheric gases, including oxygen, argon and carbon dioxide, are vented to the condenser section 58 and outside of the refrigeration unit 24. The nitrogen from separator 90 is directed to a second valve V2. The second valve V2 is a bleeder port that allows a small portion of the nitrogen from the separator 90 to be sent to a nitrogen sensor 96 to measure the purity of the nitrogen. The second valve V2 may be controlled by the controller 70.

When nitrogen is provided upstream of the evaporator 32, the nitrogen enters the interior of the container 10 and forces oxygen and carbon dioxide out of the interior of the container 10. Reducing the oxygen level in the container 10 reduces ripening of produce. Reducing the carbon dioxide level in the container 10 prevents damage to cargo in the container due to high carbon dioxide levels.

In operation, the controller 70 monitors levels of at least one gas inside the container 10, using oxygen sensor 92 and/or carbon dioxide sensor 94 in communication with the controller 70. The oxygen sensor 92 and/or carbon dioxide sensor 94 may be located in the evaporator section 54, upstream of the evaporator 32. To add outside air to the container, the controller 70 sends a signal to turn on the air compressor 80 and sends a signal to the first valve V1 to set the first valve V1 to the open position. This directs the compressed air from the air compressor 80 to the interior of the container 10. To add nitrogen to the container to control the levels of other gasses, the controller 70 sends a signal to turn on the air compressor 80 and closes valve V1. This directs the compressed air from the air compressor 80 to the separator 90, which produces nitrogen that is directed to the interior of the container 10 (e.g., upstream or downstream of the evaporator 32). To measure purity of the nitrogen generated by the separator 90, the controller 70 opens the bleeder port of the second valve V2 to direct a portion of the nitrogen to the nitrogen sensor 96 in communication with the controller 70. Optionally, a separate nitrogen sensor 96 is not used, as the measurements from the oxygen sensor 92 provides an indication of the nitrogen level in the container 10.

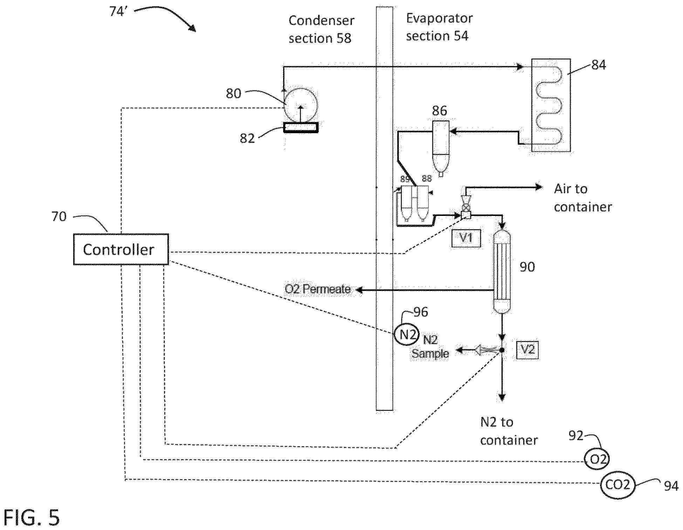

FIG. 5 depicts the atmosphere control system 74' in a variation of the above. The arrangement of FIG. 5 is similar to that of FIG. 4, with the exception that second filter 88 and third filter 89 are located in the evaporator section 54, rather than in the condenser section 58. Operation of the atmosphere control system 74' is similar to that of FIG. 4.

Positioning the air compressor 80 in the condenser section 58 allows use of an air compressor not requiring an enclosed motor and enclosed crankcase, thereby allowing some acceptable amount of air blow (i.e., air leakage due to pressure and movement of the cylinders) from compressor crankcase. If a non-enclosed compressor was placed inside in the evaporator section, air blow from the compressor crankcase would directly impact system performance by not allowing proper control of oxygen. Positioning the air compressor 80 in the condenser section 58 also provides easier access for maintenance on the air compressor 80. A removable shield or plate can be used to protect the air compressor 80 from outside elements such as water and dirt, since the air compressor is located in the condenser section 58 and not inside the container 10. The atmosphere control system 74 is controlled by the same controller 70 used to control the refrigeration unit 24, or by a separate controller.

While the invention has been described in detail in connection with only a limited number of embodiments, it should be readily understood that the invention is not limited to such disclosed embodiments, but is only limited by the scope of the appended claims.

## Claims

1. A refrigeration unit (24) for use with a container (10), the refrigeration unit comprising:
a compressor (26), a condenser (28), an expansion device (30) and an evaporator (32) configured to circulate a refrigerant;
a condenser section (58) housing the compressor and the condenser;
an evaporator section (54) housing the evaporator; and
an atmosphere control system (74, 74') comprising: an air compressor (80) configured to generate compressed air, the air compressor located outside the container; a separator (90) configured to receive the compressed air and output nitrogen into the interior of the container; a valve (V1) between the air compressor (80) and the separator (90); a heat exchanger (84) positioned between the air compressor (80) and the separator (90), the heat exchanger configured to cool the compressed air from the air compressor; and a water separator (86) between the heat exchanger (84) and the separator (90); wherein, the valve (V1), in an open position, directs compressed air to the container (10); wherein the air compressor is located in the condenser section; and wherein the separator is located in the evaporator section.

2. The refrigeration unit (24) of claim 1 wherein:
the valve (V1), in a closed position, directs compressed air to the separator (90).

3. The refrigeration unit (24) of claim 2 further comprising:
a controller (70) configured to control the valve (V1) to move between the open position and the closed position.

4. The refrigeration unit (24) of claim 3 wherein:
the controller (70) is configured to control the compressor (26).

5. The refrigeration unit (24) of claim 3 or 4 further comprising:
a sensor (96) in the evaporator section (54), the sensor configured to measure a level of a gas in the container (10);
wherein the controller (70) is configured to move the valve (V1) between the open position and the closed position in response to the level of the gas in the container.

6. The refrigeration unit (24) of any preceding claim wherein:
the atmosphere control system (74, 74') comprises at least one filter (82) between the water separator (86) and the separator (90).

7. The refrigeration unit (24) of claim 6 wherein:
the at least one filter (82) is located in the condenser section (58).

8. The refrigeration unit (24) of claim 6 wherein:
the at least one filter (82) is located in the evaporator section (54).

## Patentansprüche

1. Kühleinheit (24) zur Verwendung mit einem Behälter (10), wobei die Kühleinheit umfasst:
einen Verdichter (26), einen Kondensator (28), eine Expansionsvorrichtung (30) und einen Verdampfer (32), die eingerichtet sind, um ein Kühlmittel zirkulieren zu lassen;
einen Kondensatorabschnitt (58), der den Verdichter und den Kondensator unterbringt; einen Verdampferabschnitt (54), der den Verdampfer unterbringt; und
ein Atmosphären-Steuersystem (74, 74'), umfassend: einen Luftkompressor (80), der eingerichtet ist, um Druckluft zu erzeugen, wobei sich der Luftkompressor außerhalb des Behälters befindet; einen Abscheider (90), der eingerichtet ist, um die Druckluft aufzunehmen und Stickstoff in das Innere des Behälters abzugeben; ein Ventil (V1) zwischen dem Luftkompressor (80) und dem Abscheider (90); einen Wärmetauscher (84), der zwischen dem Luftkompressor (80) und dem Abscheider (90) positioniert ist, wobei der Wärmetauscher eingerichtet ist, um die Druckluft von dem Luftkompressor zu kühlen; und einen Wasserabscheider (86) zwischen dem Wärmetauscher (84) und dem Abscheider (90); wobei das Ventil (V1) in einer offenen Position Druckluft zu dem Behälter (10) leitet; wobei sich der Luftkompressor in dem Kondensatorabschnitt befindet; und wobei sich der Abscheider in dem Verdampferabschnitt befindet.

2. Kühleinheit (24) nach Anspruch 1, wobei:
das Ventil (V1) in einer geschlossenen Position Druckluft zu dem Abscheider (90) leitet.

3. Kühleinheit (24) nach Anspruch 2, ferner umfassend:
eine Steuerung (70), die eingerichtet ist, um das Ventil (V1) zu steuern, damit es sich zwischen der offenen Position und der geschlossenen Position bewegt.

4. Kühleinheit (24) nach Anspruch 3, wobei:
die Steuerung (70) eingerichtet ist, um den Verdichter (26) zu steuern.

5. Kühleinheit (24) nach Anspruch 3 oder 4, ferner umfassend:
einen Sensor (96) in dem Verdampferabschnitt (54), der eingerichtet ist, um einen Pegel eines Gases in dem Behälter (10) zu messen;
wobei die Steuerung (70) eingerichtet ist, um das Ventil (V1) als Reaktion auf den Pegel des Gases in dem Behälter zwischen der offenen Position und der geschlossenen Position zu bewegen.

6. Kühleinheit (24) nach einem der vorhergehenden Ansprüche, wobei:
das Atmosphären-Steuersystem (74, 74') mindestens einen Filter (82) zwischen dem Wasserabscheider (86) und dem Abscheider (90) umfasst.

7. Kühleinheit (24) nach Anspruch 6, wobei:
sich der mindestens eine Filter (82) in dem Kondensatorabschnitt (58) befindet.

8. Kühleinheit (24) nach Anspruch 6, wobei:
sich der mindestens eine Filter (82) in dem Verdampferabschnitt (54) befindet.

## Revendications

1. Unité de réfrigération (24) destinée à être utilisée avec un contenant (10), l'unité de réfrigération comprenant :
un compresseur (26), un condenseur (28), un dispositif d'expansion (30) et un évaporateur (32) conçus pour faire circuler un réfrigérant ;
une partie condenseur (58) abritant le compresseur et le condenseur ;
une partie évaporateur (54) abritant l'évaporateur ; et
un système de régulation d'atmosphère (74, 74') comprenant : un compresseur d'air (80) conçu pour générer de l'air comprimé, le compresseur d'air étant situé à l'extérieur du contenant ; un séparateur (90) conçu pour recevoir l'air comprimé et évacuer l'azote à l'intérieur du contenant ; une vanne (V1) entre le compresseur d'air (80) et le séparateur (90) ; un échangeur de chaleur (84) positionné entre le compresseur d'air (80) et le séparateur (90), l'échangeur de chaleur étant conçu pour refroidir l'air comprimé en provenance du compresseur d'air ; et un séparateur d'eau (86) entre l'échangeur de chaleur (84) et le séparateur (90) ; dans laquelle la vanne (V1), dans une position ouverte, dirige l'air comprimé vers le contenant (10) ; dans laquelle le compresseur d'air est situé dans la partie condenseur ; et dans laquelle le séparateur est situé dans la partie évaporateur.

2. Unité de réfrigération (24) selon la revendication 1, dans laquelle :
la vanne (V1), en position fermée, dirige l'air comprimé vers le séparateur (90).

3. Unité de réfrigération (24) selon la revendication 2, comprenant également :
un dispositif de commande (70) conçu pour commander la vanne (V1) afin qu'elle bascule entre la position ouverte et la position fermée.

4. Unité de réfrigération (24) selon la revendication 3, dans laquelle :
le dispositif de commande (70) est conçu pour commander le compresseur (26).

5. Unité de réfrigération (24) selon la revendication 3 ou 4, comprenant également :
un capteur (96) dans la partie évaporateur (54), le capteur étant conçu pour mesurer un niveau d'un gaz dans le contenant (10) ;
dans laquelle le dispositif de commande (70) est conçu pour faire basculer la vanne (V1) entre la position ouverte et la position fermée en réponse au niveau du gaz dans le contenant.

6. Unité de réfrigération (24) selon une quelconque revendication précédente, dans laquelle :
le système de régulation d'atmosphère (74, 74') comprend au moins un filtre (82) entre le séparateur d'eau (86) et le séparateur (90).

7. Unité de réfrigération (24) selon la revendication 6, dans laquelle :
l'au moins un filtre (82) est situé dans la partie condenseur (58) .

8. Unité de réfrigération (24) selon la revendication 6, dans laquelle :
l'au moins un filtre (82) est situé dans la partie évaporateur (54) .
